# EUROPEAN PATENT APPLICATION

(11) **EP 2 840 001 A2**
(43) Date of publication of application: **25.02.2015**
(21) Application number: 14179814.0
(22) Date of filing: 05.08.2014
(51) Int. Cl.: B60W 20/00

(54) **Hybrid drive vehicle control method and system**

(30) Priority: 05.08.2013 US 201361862232 P
(71) Applicant: PARKER HANNIFIN CORPORATION, Cleveland, OH 44124-4141 (US)
(72) Inventor: Song, Guobiao, Dublin, OH Ohio 43016 (US); Zhang, Yisheng, Dublin, OH Ohio 43016 (US)
(74) Representative: Belcher, Simon James

(57) **Abstract**

A hybrid drive vehicle control method for a hybrid drive vehicle which includes a prime mover, drive wheels, a hybrid mechanism having an energy storage device, an electrical controller, and a mechanical gear set mechanically connecting the prime mover, the drive wheels and the hybrid mechanism. A prime mover reference command corresponding to a torque output by the prime mover is generated using a prime mover torque-based feedback control in combination with prime mover residual torque compensation. A hybrid mechanism reference command corresponding to a torque output by the hybrid mechanism and applied to the prime mover is generated using feedforward compensation. A hybrid mechanism feedback signal corresponding to a torque applied by the hybrid mechanism to the prime mover is also generated.

## Description

This invention relates generally to a hybrid drive vehicle control method and system and to a vehicle. More specifically, the invention relates to such a method and system for use with vehicles having vehicle body operated power consumption systems and/or for use with vehicles that may require stabilization of prime mover speed.

Hybrid drive vehicles may include a prime mover such as an internal combustion engine, drive wheels, a hybrid mechanism, and a mechanical gear set connecting the prime mover, the hybrid mechanism and the drive wheels. In an energy storing mode the hybrid mechanism may be driven by the drive wheels to capture energy under certain conditions, such as during vehicle braking. The captured energy may be stored in an energy storage device. In an energy expending mode the hybrid mechanism may expend the stored energy to drive the drive wheels to propel the vehicle. In the case of an electric hybrid vehicle, the hybrid mechanism may include an electrical motor generator mechanism and a battery. In the case of a hydraulic hybrid vehicle, the hybrid mechanism may include a hydraulic pump motor mechanism and an accumulator.

Hybrid drive vehicles may also include vehicle body power equipment. For example, if the vehicle is a refuse truck, the vehicle body power equipment may include a loader that operates when the vehicle is stationary to pick up refuse or refuse containers and dump the refuse in a refuse hauler container of the vehicle.

Technical difficulties are presented in hybrid drive vehicles that use internal combustion engines as the prime mover when the vehicle body power equipment is operated at relatively low prime mover speeds. Since the vehicle may be stationary when the vehicle body power equipment is operated, the prime mover of the vehicle may initially be operating at a relatively low speed (e.g., idle speed) when the vehicle body power equipment is initially actuated. Prime movers embodied as internal combustion engines produce relatively low torque output at relatively low speeds and only produce peak torque output at relatively higher speeds. For this reason, it may be necessary to increase the prime mover speed when the vehicle body power equipment is initially actuated.

To increase prime move speed, hybrid drive vehicles may provide a control signal to the prime mover when vehicle body power equipment is operated at relatively low prime mover speeds, to increase the speed of the prime mover. The prime mover speed increase, however, may require a time delay to allow prime mover speed to increase before the vehicle body power equipment can be fully operated. This time delay may decrease productivity or decrease operation smoothness. Also, if prime mover speed is not increased in a timely manner before operation of the vehicle body power equipment, or if the vehicle body power equipment load imposes a relatively sudden load increase, such operation may tend to stall the prime mover or to cause the prime mover to increase speed relatively slowly or decrease operation smoothness. Because vehicle prime movers embodied as internal combustion engines fuelled by compressed natural gas (CNG) produce relatively less torque at relatively low speeds than similar engines fuelled by diesel or gasoline fuels, these difficulties may be more pronounced in CNG fuelled vehicles.

Further, CNG engine response is significantly slower than comparable gasoline or diesel fuelled engines, and significant residual torque may exist for some period of time. Such residual torque may be unpredictable after torque demand is removed from the system. This can cause control issues (e.g., engine flare/stall, excessive speed oscillation, etc.), particularly in series hybrid applications that require fast response.

The invention provides apparatus and a method that can overcome one or more of the above and/or other technical difficulties. In one arrangement, torque from the vehicle hybrid mechanism is used to assist the vehicle prime mover to power the vehicle body power equipment under certain conditions, particularly when the vehicle is stationary. In another arrangement, torque from the vehicle hybrid mechanism is used to stabilize prime mover speed, particularly during unloading (return to idle) of the prime mover.

The invention therefore provides a control method for a hybrid drive vehicle having a prime mover, drive wheels, a hybrid mechanism having an energy storage device, an electrical controller, and a mechanical gear set mechanically connecting the prime mover, the drive wheels and the hybrid mechanism. The method includes:
generating a first hybrid mechanism torque command corresponding to a first torque component output by the hybrid mechanism, the first hybrid mechanism torque command generated using a feed-forward controller based on at least one of an actual torque output by the prime mover or a prescribed torque output by the prime mover,
generating a second hybrid mechanism torque command corresponding to a second torque component output by the hybrid mechanism, the second hybrid torque command based on a prime mover speed setpoint and a prime mover speed feedback, and
generating an output torque command for the hybrid mechanism, the output torque command based on a combination of the first hybrid mechanism torque command and the second hybrid mechanism torque command.

Optionally, the method includes generating a prime mover torque command corresponding to a desired torque output of the prime mover.

Optionally, generating the prime mover torque command includes using prime mover torque-based feedback control in combination with prime mover residual torque compensation.

Optionally, the method includes commanding the prime mover to output a desired torque and, subsequent to the commanding step, obtaining an actual torque output by the prime mover.

Optionally, the method includes using a time-based torque fading model to modify the obtained actual torque output.

Optionally, the step of generating the first hybrid mechanism torque command involves using the modified actual torque output to generate the first hybrid mechanism torque command.

Optionally, generating the second hybrid mechanism torque command comprises generating the second hybrid mechanism torque command based on a prime mover speed setpoint and an actual prime mover speed.

Optionally, generating the second hybrid mechanism torque command based on the prime mover speed setpoint and the actual prime mover speed comprises selecting as the prime mover speed setpoint a smaller of an actual speed of the prime mover at the time the method is initiated and a prescribed speed value.

Optionally, the method includes applying a deadband compensation for the hybrid mechanism.

Optionally, the step of generating the output torque command includes basing the output torque command on the deadband compensation.

Optionally, the hybrid drive vehicle includes vehicle body power equipment, and generating a prime mover torque command corresponding to a desired torque output by the prime mover comprises generating the first prime mover torque command using a feed-forward controller based on a torque demand of a body control function.

Optionally, the step of generating the prime mover torque command involves generating a second prime mover torque command based on a prime mover speed command and an actual prime mover speed.

Optionally, the method includes outputting a primary torque command to the prime mover, the primary torque command based on a summation of the first torque command and the second torque command.

Optionally, the method includes using the prime mover to drive the body power equipment when the vehicle is stationary, and using the hybrid mechanism to assist the prime mover in driving the vehicle body power equipment under predetermined conditions when the vehicle is stationary.

Optionally, the step of using the hybrid mechanism to assist the prime mover in driving the vehicle body power equipment includes connecting the hybrid mechanism and the vehicle body power equipment when the vehicle is stationary, and using stored energy in the energy storage device to power the vehicle body power equipment through the hybrid mechanism when the vehicle is stationary.

Optionally, the step of using the hybrid mechanism includes determining an energy storage level of the energy storage device, and using the hybrid mechanism to assist the prime mover only when the energy storage level exceeds a prescribed minimum level.

Optionally, the vehicle body power equipment is powered by a hydraulic pump, and using the hybrid mechanism to assist the prime mover in driving the vehicle body power equipment includes changing an displacement of the hydraulic pump.

Optionally, the hybrid mechanism is a hydraulic hybrid mechanism, the energy storage device is a hydraulic accumulator, and using the hybrid mechanism to assist the prime mover in driving the vehicle body power equipment includes using the hydraulic fluid in the accumulator to drive a hydraulic motor, and mechanically connecting the output of the hydraulic motor to the drive input of the hydraulic pump of the power equipment.

Optionally, the method includes enabling and disabling the hybrid mechanism to assist the prime mover.

Optionally, the steps of enabling and disabling include determining at least one of (a) whether any vehicle body power equipment operation is active, (b) whether any vehicle body power equipment operation was active a first prescribed period of time ago, (c) whether the hybrid mechanism has been in an enabled state for greater than a second prescribed time period, whether prime mover speed is stable, and (d) whether the hybrid mechanism was last active less than a third prescribed time period ago, and enabling or disabling the hybrid mechanism based on the determination.

The invention also provides a hybrid vehicle control system includes a processor and memory, and logic stored in the memory and executable by the processor, the logic being adapted to cause the processor to perform the method described herein.

The invention also provides a hybrid vehicle includes the vehicle control system described herein.

Optionally, the vehicle includes the prime mover, the drive wheels, the hybrid mechanism having an energy storage device, and the mechanical gear set mechanically connecting the prime mover and the drive wheels and the hybrid mechanism.

Optionally, the vehicle includes the vehicle body power equipment.

Optionally, the prime mover comprises a compressed natural gas (CNG) engine.

The invention also provides a hybrid drive vehicle control method comprising the steps:
providing a hybrid drive vehicle having a prime mover engine, drive wheels, a hybrid mechanism having an energy storage device, a mechanical gear set mechanically connecting the engine and the drive wheels and the hybrid mechanism, vehicle body power equipment, and an electrical controller,
controlling the hybrid mechanism using the controller,
using the engine to drive the body power equipment when the vehicle is stationary, and
using the hybrid mechanism to assist the engine to drive the vehicle body power equipment under predetermined conditions when the engine is stationary.

Optionally, the step using the hybrid mechanism to assist the engine to drive the vehicle body power equipment includes connecting the hybrid mechanism and the vehicle body power equipment when the vehicle is stationary, and using stored energy in the energy storage device to power the vehicle body power equipment through the hybrid mechanism when the vehicle is stationary.

Optionally, the method includes enabling and disabling using the hybrid mechanism to assist the engine to power the vehicle body power equipment, the enabling and disabling including determining if any vehicle body power equipment operation is active, and determining if any vehicle body power equipment operation was active some predefined period of time ago.

Optionally, the method includes determining the energy storage level of the energy storage device, and using the hybrid mechanism to assist the engine to drive the vehicle body power equipment only when the energy storage level exceeds a predefined minimum level.

Optionally, the step using the hybrid mechanism to assist the engine to drive the vehicle body power equipment includes using engine torque based feedback speed control with load compensation.

Optionally, the step of using the hybrid mechanism to assist the engine to drive the vehicle body power equipment includes calculating the vehicle body power equipment feedback control and providing another feedback loop to maintain engine speed.

Optionally, the step of using the hybrid mechanism to assist the engine to drive the vehicle body power equipment includes calculating vehicle body power equipment command using feedback control strategy with feedforward compensation.

Optionally, the vehicle body power equipment is hydraulic pump powered, and the step using the hybrid mechanism to assist the engine to drive the vehicle body power equipment includes changing the output displacement of the pump.

Optionally, the hybrid mechanism is a hydraulic hybrid mechanism, the energy storage device is a hydraulic accumulator, and the step using the hybrid mechanism to assist the engine to drive the vehicle body power equipment includes using the hydraulic fluid in the accumulator to drive a hydraulic motor, and mechanically connecting the output of the hydraulic motor to the drive input of the hydraulic pump of the vehicle body power equipment.

The invention also provides a hybrid vehicle control system having the components to perform the method discussed above.

The invention also provides a hybrid vehicle which uses including the method and/or the control system discussed above.

The invention is described below by way of example with reference to the accompanying drawings, in which:
Fig. 1 is a schematic representation of a wheeled land vehicle.
Fig. 2 is a flow chart illustrating steps that may be implemented in one portion of a first control method and a first control system for a hybrid drive vehicle.
Fig. 3 is a flow chart illustrating steps that may be implemented in another portion of the first control method and the first control system for a hybrid drive vehicle.
Fig. 4 is a flow chart illustrating steps that may be implemented in one portion of a second control method, a second control system and a vehicle.
Fig. 5 is a flow chart illustrating steps that may be implemented in another portion of the second control method, the second control system and the vehicle.

A system and method in accordance with the invention can enhance the efficiency of a hybrid vehicle. More particularly, the system and method can supplement power provided by a prime mover with power from a hybrid power mechanism. In this manner, other power consumers, such as vehicle body power equipment, can be operated immediately without waiting for the prime mover speed to be increased. Further, the supplemental power provided by the hybrid power mechanism can eliminate problems associated with the prime mover stalling (particularly when the prime mover is embodied as a CNG engine) and/or can improve speed regulation of the prime mover.

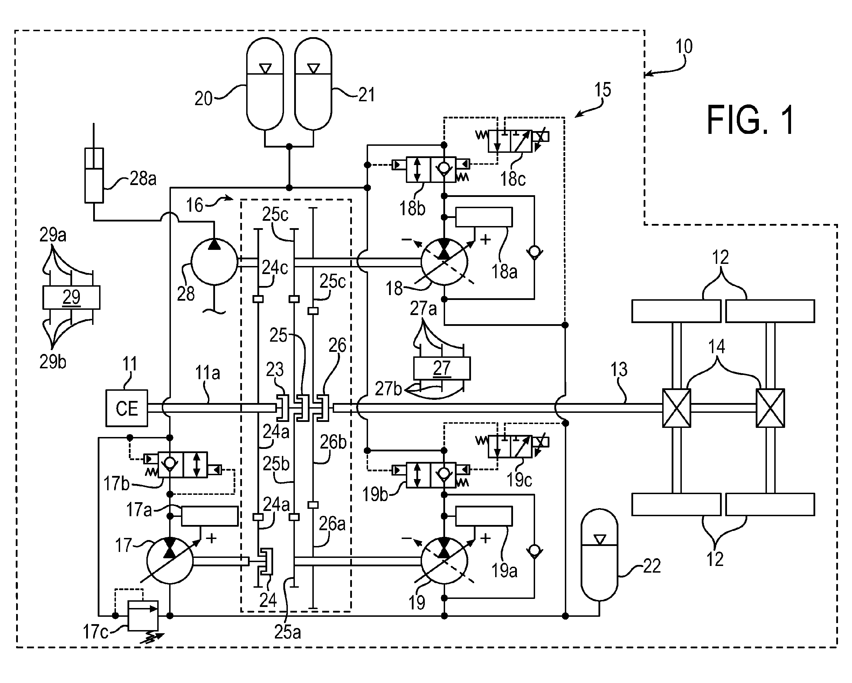

Referring to the drawings, Fig. 1 shows a hybrid drive vehicle 10, which may be any desired electric or hydraulic hybrid vehicle. The vehicle might be, for example, a hydraulic hybrid drive vehicle such as a large refuse pick up vehicle. The vehicle 10 includes a prime mover 11, which in a preferred application is, for example, an internal combustion engine fuelled by compressed natural gas and having a prime mover shaft 11a. The vehicle 10 also includes drive wheels 12 connected to a drive shaft 13 through differentials 14. The vehicle 10 also includes a hybrid mechanism 15. The hybrid mechanism 15 has an energy storing mode in which the wheels 13 and/or the prime mover 11 drive the hybrid mechanism 15 through the shafts 13, 11a to capture and store energy under certain conditions such as braking vehicle 10 as described below. The hybrid mechanism 15 also has an energy expending mode that expends stored energy to drive the wheels 12 (to propel the vehicle 10) and/or to the prime mover 11 (to improve speed regulation) as also described below. The vehicle 10 also includes a gear set 16 that drivingly connects the prime mover 11, the hybrid mechanism 15, and the drive wheels 12 through shafts the 13, 11a.

The hybrid mechanism 15 includes hydraulic pump motor units 17, 18, 19, each of which may be any suitable hydraulic pump or motor or pump motor unit. In a preferred arrangement, each of the pump motor units 17, 18, 19 is a variable displacement bent-axis hydraulic pump motor, such as the hydraulic pump motor model C24 which is available from Parker Hannifin Corporation of Cleveland, Ohio. The pump motor unit 17 operates as a hydraulic pump during the energy storing mode and operates as a motor under other conditions to assist the prime mover 11 to power vehicle body power equipment and/or regulate prime mover speed, as described below. The pump motor units 18, 19 operate as motors to propel the vehicle 10 during the energy expending mode, as also described below. Pump controls 17a, 18a, 19a control the displacement of each of their associated pump motor units 17, 18, 19 by controlling the swashplate (not shown) of each unit. As known, controlling displacement in this manner controls speed and torque of pump motor units 17, 18, 19. Valves 17b, 17c, 18b, 18c, 19b, 19c control fluid communication between each of their associated pump motor units 17, 18, 19 and high pressure accumulators 20, 21 and low pressure accumulator 22.

The gear set 16 in a known manner includes a first mechanical connection 23, a second mechanical connection 24, a third mechanical connection 25, and a fourth mechanical connection 26. The first mechanical connection 23 selectively connects the prime mover 11 and the prime mover shaft 11a to drive shaft 13 and wheels 12 through connections 25, 26, to provide a direct mechanical drive mode without use of hybrid mechanism 16, such as for relatively higher speed or relatively longer distance travel. The second mechanical connection 24 selectively connects the hydraulic pump motor 17 to the prime mover shaft 11a through gears 24a, 24b. The third mechanical connection 25 selectively connects the hydraulic motors 18, 19 to the wheels 12 through gears 25a, 25b, 25c and the drive shaft 13, with a relatively lower gear ratio for relatively lower travel speeds of the vehicle 10. The fourth mechanical connection 26 selectively connects the hydraulic motors 18, 19 to the wheels 12 through gears 26a, 26b, 26c and the drive shaft 13, with an intermediate gear ratio for intermediate travel speeds of the vehicle 10. An electronic controller 27 receives input signals 27a and provides output command signals 27b to operate the pump units 17, 18, 19 through their associated controls 17b, 18b, 19b, and to operate the mechanical connections 23, 24, 25, 26 through suitable wired or wireless connections.

In an energy storing mode, the hybrid mechanism 15 in a known manner captures and stores energy under certain conditions such as during vehicle braking. In this mode, the pump 18, 19, and/or 17 is driven by the wheels 12 through the mechanical connection 24 and through the mechanical connection 25, 26 and provides braking resistance for the vehicle 10. The pump 18, 19 and/or 17 captures the braking energy by generating high pressure hydraulic fluid that is communicated from the pump 18, 19 and/or 17 and stored in the high pressure accumulators 20, 21.

In an energy expending mode, the hybrid mechanism 15 in a known manner expends stored energy in the high pressure accumulators 20, 21 to drive the wheels 12 through the shaft 13 and through mechanical connections 25, 26 to propel the vehicle 10. In this mode, the pump 17 is disconnected from the shaft 11a by the mechanical connection 24. Also in this mode, the valves 18b, 19b connect the high pressure accumulators 20, 21 to their associated hydraulic motors 18 and 19 to cause the hydraulic motor 18, 19 to drive the wheels 12 through the mechanical connection 25 and/or 26.

The vehicle 10 further includes vehicle body power equipment 28 that is described below and is powered by the prime mover 11 through the shaft 11a and the gears 24b , usually when the vehicle 10 is stationary. The vehicle body power equipment 28 may be any suitable equipment, and in a preferred arrangement can for example be a variable displacement hydraulic pump whose displacement and torque are determined, for example, by a swashplate (not shown). Output flow from the hydraulic pump 28 flows to the vehicle body power equipment hydraulic cylinder 28a, which with the hydraulic pump 28 are components of a vehicle body power equipment such as, for example a loader (not shown) that operates when the vehicle 10 is stationary to pick up refuse or refuse containers (not shown) and dump the refuse in a refuse hauler container (not shown) of the vehicle 10. The hydraulic pump 28 is controlled by a vehicle body controller 29 that receives inputs 29a and provides outputs 29b including outputs to change the output displacement of the pump 28 through suitable wired or wireless connections.

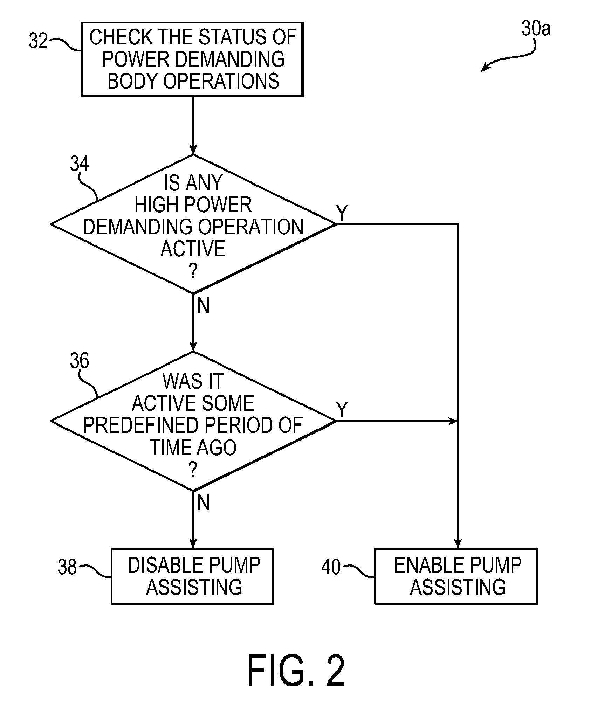

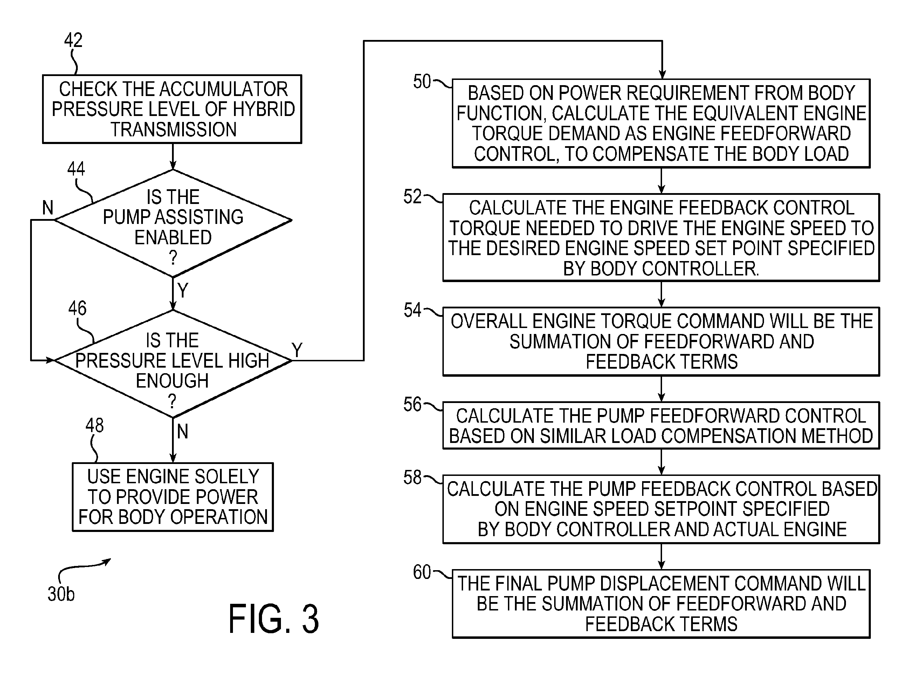

In a first arrangement, as shown in Figs. 2 and 3, the hybrid mechanism 15 operates according to a hybrid drive vehicle control method 30 to power the vehicle body power equipment 28 partially under certain conditions, particularly when the vehicle 10 is stationary. The method 30 includes a first sub-method 30a shown in Fig. 2 and a second sub-method 30b shown in Fig. 3. In the following description the method 30 is described on the basis that the electronic controller 27 executes the method steps. However, the first sub-method 30a and/or the second sub-method 30b may be executed by either the electronic controller 27 or the vehicle body controller 29. Alternatively, portions of the first sub-method 30a and/or the second sub-method 30b may be executed in the electronic controller 27 while other portions may be executed in the vehicle body controller 29.

Referring to Fig. 2, the first sub-method 30a determines when to enable the hybrid mechanism 15 to assist the prime mover 11 and to power the equipment 28 partially. The first sub-method 30a includes step 32, at which the electronic controller 27 receives inputs and checks the status of power demanded by the body power equipment 28. For example, the vehicle body controller 29 can receive data via its inputs 29a indicative of a desired state of the power demanding body operations. Such inputs may be obtained from user operated controls, such as a joystick pushbutton, or the like, corresponding to a particular operation, e.g., lift, dump, etc., of the power demanding body operations. Alternatively or in addition, a particular operation of the power demanding body operations may be in process. The vehicle body controller 29, which oversees the operation of the power demanding body operations, is aware of an active operation and can deduce the status accordingly. The vehicle body controller 29 can communicate via its outputs 29b the status of the power demanding body operations to the electronic controller 27 via its inputs 27a.

At step 34, based upon step 32, the electronic controller 27 determines if any power demanding operation, such as the pump 28 and the cylinder 28a, is active. If yes at step 34, the first sub-method 30a proceeds to step 40 for the electronic controller 27 to enable the hybrid mechanism 15 and its pump motor 17 to assist the body power equipment 28. Enabling the hybrid mechanism may include engaging the mechanical connection 24, selecting the appropriate gear set 24, 25, 26 and commanding the valves 17b, 17c, 18b, 18c, 19b, 19c to an appropriate position. In the preferred arrangement, the mechanical connection 24 may be engaged at all times during operation of the first sub-method 30a so that the pump motor 17 (acting as a motor) is connected to the pump 28 through the gears 24a, 24b, 24c. In another arrangement, the mechanical connection 24 may be disengaged at certain times in which case the enabling at step 40 may include the engaging mechanical connection 24.

If at step 34 no power demanding operation is active then at step 36 the electronic controller 27 determines if the body power equipment 28 was active at a defined earlier time. For example, the current state of the power demanding body operations may be provided to an off-delay timer having a prescribed delay time. As the status transitions from active to inactive, the output of the off-delay timer will remain TRUE until the prescribed time delay has elapsed, at which time the off-delay timer will switch to FALSE (assuming the status of the power demanding body operations has not changed). If yes (e.g., a TRUE output from the timer), this would indicate that the hybrid mechanism 15 should remain enabled to avoid unnecessary on and off cycles, and the electronic controller 27 proceeds to step 40. If no (e.g., a FALSE output from the timer), the electronic controller 27 at step 38 disables the hybrid mechanism 15 and its pump motor 17 from assisting the body power equipment 28. This disabling may include disengaging the mechanical connection 24 and commanding the valves 17b, 17c, 18b, 18c, 19b, 19c to an appropriate position.

Referring now to Fig. 3, the second sub-method 30b determines how to use the hybrid mechanism 15 to assist the prime mover 11 in providing power to the body power equipment 28. At step 42, the electronic controller 27 receives inputs from energy storage accumulators 20, 21 to determine stored energy level as hydraulic pressure levels of hybrid mechanism 15. Such inputs, for example, may be in the form of analog or digital signals representing a pressure within the accumulators 20, 21. At step 44, the electronic controller 27 receives the results of the first sub-method 30a described above to determine if the hybrid mechanism pump assisting is enabled. If assisting is not enabled, the second sub-method 30b proceeds to step 48 and solely uses the prime mover 11 to provide power to the body power equipment operation 28. If at block 44 assisting is enabled, the second sub-method 30b proceeds to step 46 and the electronic controller 27 determines if the pressure level in accumulators 20, 21 as determined at step 42 is high enough to assist the body power equipment operation 28 (i.e., at or above a prescribed threshold pressure). If the pressure level is not above a prescribed threshold, the second sub-method 30b proceeds to step 48 described above.

If at block 46 the pressure level in the accumulators 20, 21 is above a prescribed threshold, the second sub-method 30b proceeds to steps 50-60, which provide the command signals to command the assist from the hybrid mechanism 15 to assist the prime mover 11 in powering the body power equipment pump 28. Specifically, the outputs of steps 50-60 include command signals that change displacement of the pump motor 17 (operating as a motor) to manipulate the power and torque provided by the pump motor 17 to the pump 28 through the gears 24a, 24b, 24c to maintain speed of the prime mover 11. This assists the power and torque that is also being provided by the prime mover 11 to the pump 28 through the shaft 11a and the gears 24b, 24c, so that the pump 28 is being driven by both the prime mover 11 and the pump motor 17 according to the method 30. Further, the outputs of steps 50-60 include command signals to control the prime mover 11 through the vehicle body controller 29. Accordingly, the feedback and feedforward control strategy described below in steps 50-60 is to control the prime mover 11 and the displacement of the pump motor 17. Further, if the mechanical connection 24 is disengaged at the start of the second sub-method 30b, the outputs of steps 50-60 may include command signals to engage the mechanical connector 24 so that the pump motor 17 (acting as a motor) is connected to the pump 28 through the gears 24a, 24b, 24c to assist the prime mover 11 in driving the pump 28, or to disengage the mechanical connector 24.

Steps 50-60 of the second sub-method 30b use torque based feedback prime mover speed control with load compensation. One goal of the second sub-method 30b is to maintain the prime mover 11 speed at a desired speed specified by the body controller 29 in response to inputs 29a. The controllers 27, 29 may be connected to one another through suitable wire or wireless connections. Outputs of the second sub-method 30b include a displacement command to the pump 17 and a torque command to the prime mover controller 29. The prime mover torque command may include two parts. The first part provides a torque command to the prime mover controller to provide the torque required for maintaining the prime mover 11 speed. The second part is prime mover load compensation, which is dynamically calculated based upon active body functions 28a, to maintain prime mover speed. A final prime mover torque command then is generated based on the sum of the first and second parts. This torque command then is used by the controller to cause the prime mover to produce a torque output corresponding to the final torque command.

A conventional vehicle without hybrid assist as provided by the invention may react in a passive way, similar to the first part mentioned above in this paragraph. The prime mover controller in a conventional vehicle will sense the prime mover speed, and if the prime mover slows down below the commanded prime mover speed the prime mover controller will command the prime mover 11 to provide more torque (e.g., add fuel to an internal combustion engine). The conventional vehicle does not have the load compensation and the control loop in accordance with the present disclosure, so that the conventional vehicle prime mover speed control may be less accurate and may be more vulnerable to prime mover stall.

Steps 50-60 of the second sub-method 30b also calculate the pump motor 17 feedback control based upon desired prime mover speed specified by the body controller 29. The pump motor 17 feedback control provides another feedback loop to maintain the prime mover speed at a desired speed specified by the body controller 29. By changing the displacement of the pump motor 17 through the electronic controller 27, the controller 27 can manipulate the torque requirements of the pump motor 17 to maintain or to control the speed of the prime mover 11.

As noted above, steps 50-60 of the second sub-method 30b also provide a displacement command to the pump motor 17. In this regard, the electronic controller 27 calculates the pump motor 17 displacement using feedback control strategy with feedforward compensation.

For a given pressure level available from accumulators 20, 21, the displacement of the pump motor 17 (which is operating as a motor) will determine torque transmitted to the pump 28 from the pump motor 17 of the hybrid mechanism 15 through the gears 24a, 24b, 24c. The displacement command provided by the electronic controller 27 has two parts. The first part is the displacement of the pump motor 17 that is needed to control the speed of the prime mover 11. The second part is displacement of the pump motor 17 that is needed to provide torque required to perform active body functions 28a, and this second part is derived using feedforward control.

An objective of feedforward control is to measure disturbances and compensate for them before the controlled variable deviates from a setpoint. Feed-forward control involves a control equation that has certain corrective terms which account for predicted disturbances entering the system. In contrast, feedback control acts after a disturbance has occurred, e.g., upon an error signal being generated based on a setpoint and a controlled parameter. Feedforward control may be said to be proactive, while feedback control may be said to be reactive.

Referring now to step 50, the electronic controller 27 receives a power requirement from the vehicle body controller 29. For example, the vehicle body controller 29 may know that a particular body power function, such as a lifting function, is to be performed and such function requires a specific amount of power (e.g., a specific rotational speed and torque output from the prime mover 11). Based on the known body function, the vehicle body controller 29 can transmit the corresponding power requirement to the electronic controller 27. The power requirement may be transmitted as a desired speed and torque output by the prime mover 11. The electronic controller 27 then can use the power requirement to calculate an equivalent prime mover torque command corresponding to the body load. This torque command is a feedforward torque term for controlling the prime mover 11 to compensate for the additional load placed on the prime mover 11 by the body power equipment 28.

At step 52, the controller 27 also calculates the torque required to cause the prime mover speed to achieve the required speed. Step 52 effectively implements a speed regulator scheme in which torque to the prime mover 11 is varied to achieve/maintain a desired prime mover speed. For example, an actual speed of the prime mover 11 (speed feedback) may be subtracted from a desired speed for the prime mover 11 (speed setpoint) to generate a speed error signal. Based on the error signal, a torque command is provided to the prime mover 11 in a direction that minimizes the speed error signal.

At step 54, the feedforward torque term as derived at block 50 and the feedback torque command as derived at step 52 are summed to provide a final prime mover torque command. A similar process is also performed for the hybrid mechanism 15, as discussed with respect to steps 56-60 below.

Moving to step 56, the electronic controller 27 calculates a feedforward term for the hybrid mechanism 15. In this regard, the controller 27 implements a scheme similar to that described in step 50. More particularly, the electronic controller 27 uses the power requirement provided by the vehicle body controller 29 to calculate an equivalent prime mover torque demand corresponding to the body load. This torque demand (also referred to as a first hybrid mechanism torque command) is used as a feedforward term for controlling the hybrid mechanism 15 (e.g., pump 17) to assist the prime mover 11 in powering the power body equipment 28.

At step 58, the electronic controller 27 also calculates the torque required to cause the hybrid mechanism 15 to assist the prime mover 11 in achieving the required speed (which may be specified by the controller 29 as discussed above). The torque (also referred to as a second hybrid mechanism torque command) may be calculated based on a speed setpoint of the prime mover and a speed feedback of the prime mover (e.g., a difference between the speed septoint and the speed feedback terms as discussed above with respect to step 52). At step 60, the first hybrid mechanism torque command as determined at step 56 and the second hybrid mechanism torque command as determining at step 58 are summed to provide a hybrid mechanism output torque command to the hybrid mechanism 15 (e.g., to the controller 17c, which varies a displacement of the pump 17 based on the received command so as to assist the prime mover 11).

During or after the above described assisting operation of the second sub-method 30b, the first sub-method 30a continues to determine when to enable the hybrid mechanism 15 to assist the prime mover 11 and to the power equipment 28 partially. When the vehicle body power equipment 28 is no longer active or has not been active for a predefined period of time, first sub-method 30a will disable the hybrid mechanism 15 assisting at step 48. Also, during or after the above described assisting operation of the second sub-method 30b, the second sub-method 30b continues to monitor stored energy level as high pressure hydraulic fluid in accumulators 20, 21 at steps 42 and 46, and defaults at step 48 to using the prime mover 11 solely to provide power and torque for operation of the vehicle body power equipment 28 when such pressure level is not high enough.

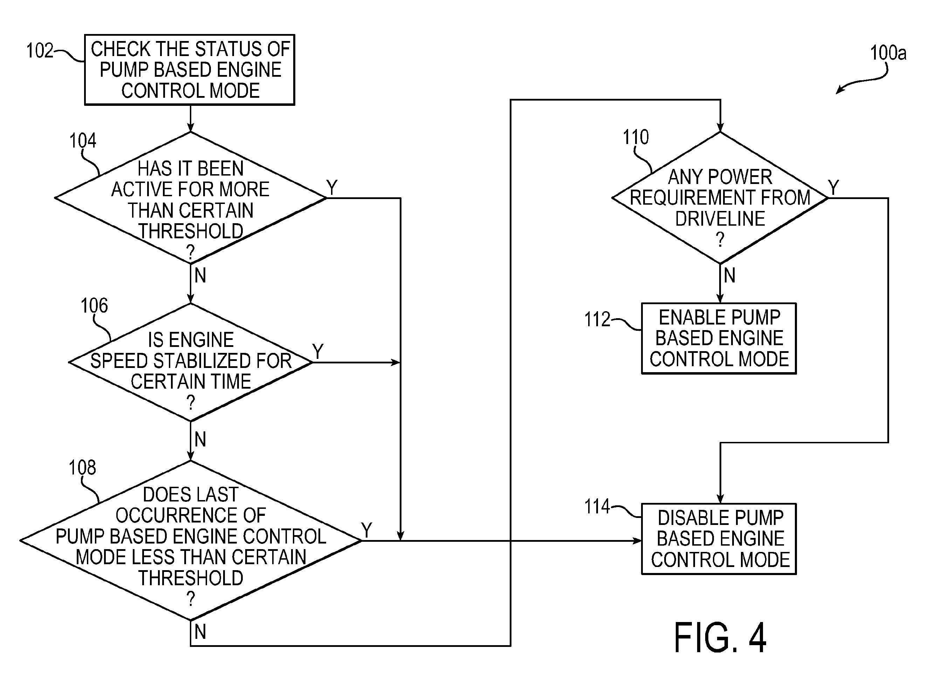

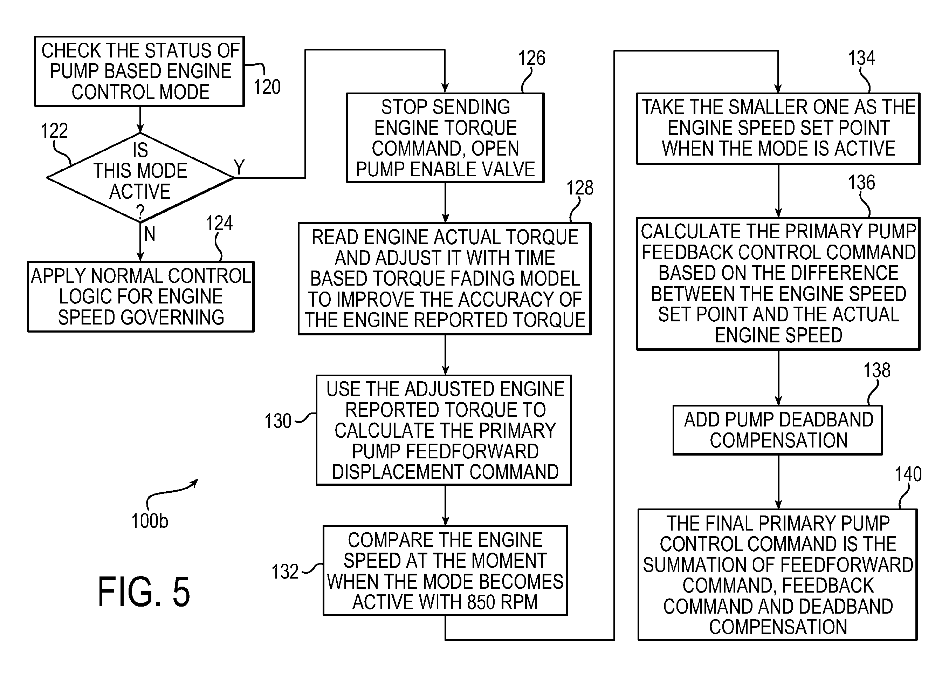

Figs. 4 and 5 show features of a method 100 which can use the hybrid mechanism 15 to provide pump-based control to the prime mover, thereby providing enhanced speed stabilization for the prime mover 11. In this regard, the method 100 causes the hybrid mechanism to provide a load on the prime mover 11 to stabilize and/or to assist in regulating prime mover speed. The method 100 includes a first sub-method 100a shown in Fig. 4 and a second sub-method 100b shown in Fig. 5. The first sub-method 100a determines when pump-based prime mover control is enabled or disabled, while the second sub-method 100b executes pump-based control of the prime mover 11.

In the following description the method 100 again will be described in the context of the electronic controller 27 executing the method steps. However, the first sub-method 100a and the second sub-method 100b may be executed by either the electronic controller 27 or the vehicle body controller 29. Alternatively, portions of the first sub-method 100a and/or the second sub-method 100b may be executed in the electronic controller 27 while other portions may be executed in the vehicle body controller 29.

Referring to Fig. 4, the first sub-method 100a determines when to enable or disable pump-based control mode. To conserve energy, it may be desirable to disable pump-based control under various circumstances. To determine if pump-based control should be enabled or disabled, status information can be used. Beginning at step 102, status information concerning the pump-based control mode is retrieved by the electronic controller 27. Such status information may include, for example, retrieving from memory a status flag corresponding to the current state of the pump-based control mode, a length of time in which pump-based control has been active, a length of time since pump-based control was last active, a length of time in which prime mover speed has been stable, etc.

At step 104, the electronic controller 27, using information obtained at step 102, compares the time in which pump-based control has been active to a first threshold time period. If the time in which pump-based control has been active is greater than the first threshold time period, the method moves to step 114 and pump-based control is disabled by the controller 27. However, if at step 104 pump-based control has not been active for a period longer than the first threshold time period, the method moves to step 106.

At step 106 the electronic controller 27 compares the time in which prime mover speed has been at a stable speed to a second threshold time period. As used herein, stable prime mover speed is defined as the actual prime mover speed being within a prescribed percentage of a commanded prime mover speed. If the prime mover speed has been stable for a time period exceeding the second threshold time period, then the method moves to step 114 and pump-based control is disabled. However, if prime mover speed has not been stable for a time period exceeding the second threshold time period, the method moves to step 108.

At step 108 the electronic controller 27 compares the last occurrence of pump-based control being active to a third threshold time period. A purpose of step 108 is to prevent frequent enabling/disabling of pump-based control. If the time period since pump-based control was last active is less than the third threshold time period, the method moves to step 114 and pump-based control is disabled. If, however, the time period since pump-based control was last active is not less than the third threshold time period, the method moves to step 110.

At step 110, the electronic controller 27 determines if the vehicle driveline requires power. For example, the controller 27 may receive inputs indicative of vehicle motion, such as a status of the gear set 16 or other inputs. When the drive line requires power, the prime mover is loaded and issues associated with prime mover speed regulation may be minimal. In such situations, pump-based control may not be needed and thus can be disabled. If at step 110 the vehicle drive line does require power, then the method moves to step 114 and pump-based control is disabled. However, if the vehicle driveline does not require power, then the method moves to step 112 and the controller 27 enables pump-based control.

Referring now to Fig. 5, the second sub-method 100b stabilizes prime mover speed by using prime mover speed-based feedback control with prime mover torque compensation to stabilize prime mover speed during unloading. Such control methodology can improve speed regulation of the prime mover, particularly when the prime mover 11 is embodied as a CNG engine. In this regard, the hydraulic pump motor 17 is coupled to the prime mover 11 via the shaft 11a and the gears 24a, 24b. Displacement of the hydraulic pump motor 17 then may be varied so as to stabilize prime mover speed.

At step 120, the electronic controller 27 obtains status information corresponding to pump-based control mode as determined from the first sub-method 100a. At step 122, the controller 27 determines if pump-based control is enabled or disabled by analysing the status information obtained at step 120. If pump-based control is disabled, then the method moves to step 124 and normal control logic is applied to regulate prime mover speed. However, if pump-based control is enabled, then the method executes steps 126-140.

Referring now to step 126, it is desired that the prime mover 11 return to idle speed. Therefore, the electronic controller 27 commands the vehicle body controller 29 to stop sending a torque command to the prime mover 11. The electronic controller 27 also commands the pump enable valves 17b, 17c to an appropriate position to provide stored hydraulic power to the hydraulic pump motor 17 and thus provide torque to the prime mover 11 in preparation for bring the prime mover 11 back to idle speed.

Since the controller has been commanded to remove a torque command to the prime mover, the prime mover 11 should return to idle speed. However, there may be significant residual torque produced by the prime mover 11 and therefore the speed of the prime mover 11 may actually increase or it may slowly return to idle speed with excessive speed oscillation. At step 128 the electronic controller 27 obtains the actual torque output (torque feedback) produced by the prime mover 11, for example, via a measurement using an appropriate sensor, and this torque output is the residual torque produced by the prime mover. Such torque report may not be very accurate (e.g., due to oscillations). To improve accuracy further, the measured actual torque output can be adjusted using a time-based torque fading model, which corrects the reported torque by scaling it with a time based factor to reduce the torque error. At step 130, the electronic controller 27 uses the adjusted prime mover torque feedback to calculate a primary pump feedforward displacement command (a first hybrid mechanism torque command) that will be used to control the hybrid mechanism 15 so as to stabilize the prime mover speed.

At step 132, the electronic controller 27 compares prime mover speed at the moment pump-based control is enabled with a prescribed speed. For example, if at the moment pump-based control changes from a disabled state to an enabled state the prime mover speed is 2000 RPM, the controller 27 stores the prime mover speed in memory. Then when step 132 is executed the controller 27 retrieves the stored speed from memory and compares it to the prescribed speed. The prescribed speed may vary based on the specifics of the system. The prescribed speed may be, for example, 850 RPM.

At step 134 the electronic controller 27, based on the comparison performed at step 132, selects the smaller of the actual prime mover speed and the prescribed speed as the speed setpoint for the prime mover. Thus, in the present example the controller would select the prescribed speed of 850 RPM, as it is less than the actual speed of 2000 RPM. A purpose of steps 132 and 134 is to determine a speed setpoint for use in controlling the hybrid mechanism 15 in bringing the prime mover smoothly to idle speed.

At step 136 the electronic controller 27 calculates the primary pump feedback control command (a second hybrid mechanism torque command). In this regard, the calculation is based on the difference between the speed setpoint selected in step 134 (i.e., the lower of the actual speed and the prescribed speed) and the actual prime mover speed. Step 134 may be analogous to a speed regulator, where an actual speed of the prime mover (speed feedback) is compared to a desired speed of the prime mover (speed setpoint) to generate an error signal. The error signal then is used to generate a command for the hybrid mechanism 15 that assists the prime mover 11 to achieve the target speed.

Because the pump may have deadband in torque generation, proper pump deadband compensation then may be computed as indicated at step 138. Such deadband compensation may be a constant termed determined during testing and/or system setup.

At step 140 the electronic controller 27 calculates the final primary pump control command that will be provided to the pump control 17a for regulating the pump speed 17 (and thus the prime mover speed). More specifically, the electronic controller 27 sums the pump feedforward command as determined at step 130, the primary pump feedback command as determined at step 136, and the pump deadband compensation as determined at step 138. The final primary pump control command then is provided to the pump control 17a, which uses the command to regulate a speed of the hydraulic pump motor 17 to assist in bringing the prime mover 11 to the desired speed (e.g., idle speed, zero speed, etc.).

The method 100 provides satisfactory prime mover speed control, particularly in applications in which the prime mover is embodied as an internal combustion engine, such as a CNG engine. The method 100 can prevent stall/flare of the prime mover, as well as excessive speed oscillation, thereby improving overall system performance.

Optionally, the mechanical gear set could include a planetary mechanical gear set.

Optionally, the hybrid mechanism could include electric motors and generators and batteries and the operation of the vehicle body power equipment could be assisted by stored electrical energy.

## Claims

1. A hybrid drive vehicle control method for a hybrid drive vehicle having a prime mover, drive wheels, a hybrid mechanism having an energy storage device, an electrical controller, and a mechanical gear set mechanically connecting the prime mover, the drive wheels and the hybrid mechanism, the method comprising:
generating a first hybrid mechanism torque command corresponding to a first torque component output by the hybrid mechanism, the first hybrid mechanism torque command generated using a feed-forward controller based on at least one of an actual torque output by the prime mover or a prescribed torque output by the prime mover,
generating a second hybrid mechanism torque command corresponding to a second torque component output by the hybrid mechanism, the second hybrid torque command based on a prime mover speed setpoint and a prime mover speed feedback, and
generating an output torque command for the hybrid mechanism, the output torque command based on a combination of the first hybrid mechanism torque command and the second hybrid mechanism torque command

2. The method according to claim 1, further comprising generating a prime mover torque command corresponding to a desired torque output of the prime mover.

3. The method according to claim 2, in which generating the prime mover torque command includes using prime mover torque-based feedback control in combination with prime mover residual torque compensation.

4. The method according to any one of claims 1 to 3, further comprising:
commanding the prime mover to output a desired torque, and
subsequent to the commanding step, obtaining an actual torque output by the prime mover.

5. The method according to any one of claims 1 to 4, in which generating the second hybrid mechanism torque command based on the prime mover speed setpoint and the prime mover speed feedback comprises selecting as the prime mover speed setpoint the smaller of an actual speed of the prime mover at the time the method is initiated and a prescribed speed value.

6. The method according to claim 2, in which the hybrid drive vehicle includes vehicle body power equipment, and generating a prime mover torque command corresponding to a desired torque output by the prime mover comprises generating the first prime mover torque command using a feed-forward controller based on a torque demand of a body control function.

7. The method according to claim 6, in which generating the prime mover torque command comprises generating a second prime mover torque command based on a prime mover speed command and an actual prime mover speed.

8. The method according to claim 7, further comprising outputting a primary torque command to the prime mover, the primary torque command based on a summation of the first torque command and the second torque command.

9. The method according to any one of claims 6 to 8, comprising:
using the prime mover to drive the body power equipment when the vehicle is stationary, and
using the hybrid mechanism to assist the prime mover in driving the vehicle body power equipment under predetermined conditions when the vehicle is stationary.

10. The method according to claim 9, in which the vehicle body power equipment is powered by a hydraulic pump, and using the hybrid mechanism to assist the prime mover in driving the vehicle body power equipment includes changing a displacement of the hydraulic pump.

11. The method according to claim 9 or claim 10, in which the hybrid mechanism is a hydraulic hybrid mechanism, the energy storage device is a hydraulic accumulator, and using the hybrid mechanism to assist the prime mover in driving the vehicle body power equipment includes using the hydraulic fluid in the accumulator to drive a hydraulic motor, and mechanically connecting the output of the hydraulic motor to the drive input of the hydraulic pump of the vehicle body power equipment.

12. A hybrid vehicle control system, comprising:
a processor and memory, and
logic stored in the memory and executable by the processor, the logic adapted to cause the processor to perform the method according to any one of claims 1 to 11.

13. A hybrid vehicle comprising:
the prime mover,
the drive wheels,
the hybrid mechanism having an energy storage device, and
the mechanical gear set mechanically connecting the prime mover and the drive wheels and the hybrid mechanism, and
the vehicle control system according to claim 12 operatively coupled to the prime mover and the hybrid mechanism.

14. The hybrid vehicle according to claim 13, further comprising the vehicle body power equipment.

15. The hybrid vehicle according to claim 13 or 14, in which the prime mover comprises a compressed natural gas (CNG) engine.
